# FASCICULE DE BREVET EUROPEEN

(11) **EP 1 876 337 B1**
(45) Date de publication et mention de la délivrance du brevet: **07.10.2009**
(21) Numéro de dépôt: 07111839.2
(22) Date de dépôt: 05.07.2007
(51) Int. Cl.: F02C 7/32, H02K 16/00

(54) **Turbomoteur avec un alternateur et procédé de transmission de mouvement à un alternateur**
Turbomotor mit Wechselstromgenerator und Verfahren zur Bewegungsübertragung an einen Wechselstromgenerator
Turboshaft engine with an alternator and method of transmitting movement to an alternator

(30) Priorité: 07.07.2006 FR 0652866
(43) Date de publication de la demande: 09.01.2008
(73) Titulaire: SNECMA, 75015 Paris (FR)
(72) Inventeur: Lardellier, Alain, Marie, Joseph, 77000 Melun (FR)
(74) Mandataire: David, Daniel

(56) Documents cités:
- EP-A1- 1 270 903
- WO-A-95/02120
- GB-A- 2 411 437
- US-A1- 3 964 506

## Description

L'invention concerne le domaine des turbomoteurs à double corps entraînant mécaniquement un alternateur.

Une partie de la puissance générée par un turbomoteur aéronautique est utilisée pour alimenter différents organes, à la fois du turbomoteur mais aussi de l'aéronef dont le turbomoteur participe à la propulsion.

Une partie de cette puissance est actuellement prélevée au niveau du compresseur haute pression, dont l'air comprimé est utilisé, notamment pour assurer la pressurisation et le conditionnement de la cabine de l'aéronef, ou encore le dégivrage. Une autre partie de cette puissance est prélevée mécaniquement sur l'arbre du corps haute pression (HP) du turbomoteur, pour entraîner l'arbre d'entrée d'un boîtier d'accessoires. Cet arbre d'entrée est entraîné en rotation par un arbre de transmission s'étendant dans un bras structural du carter et lui-même entraîné par un pignon solidaire de l'arbre HP.

Le boîtier d'accessoires, bien connu de l'homme du métier sous sa dénomination anglaise "Accessory Gear Box" (AGB), comporte différentes machines, ou accessoires, par exemple un générateur électrique, un starter, un alternateur, des pompes hydrauliques, à carburant ou à huile, ... Ces divers accessoires sont entraînés mécaniquement par la puissance prélevée sur l'arbre HP comme on vient de le voir.

La tendance actuelle vise à augmenter la part du prélèvement de puissance mécanique, convertie en puissance électrique, en raison du rôle croissant des moyens électriques, réputés plus souples d'emploi au niveau de l'avion.

Cependant, un prélèvement de puissance mécanique trop élevé a un effet négatif sur le fonctionnement du corps HP, car il est susceptible de provoquer le pompage du compresseur HP, en particulier quand le moteur fonctionne à bas régime. Cet effet est d'autant plus problématique que la demande en puissance est tout aussi importante, si ce n'est plus importante, dans les régimes de ralenti que dans les régimes de croisière ou de "pleins gaz" : le prélèvement sur le corps HP, en proportion de la puissance totale, est alors très important et le risque de pompage très élevé.

L'art antérieur enseigne de prélever une partie de la puissance mécanique sur le corps basse pression (BP). Un arbre de transmission de mouvement est dans ce cas entraîné par chacun des arbres HP et BP. En général, un différentiel permet le couplage des arbres de transmission de mouvement, l'arbre de sortie du différentiel étant inséré en entrée d'un alternateur. Toutefois, même avec un différentiel, la proportion de puissance prélevée sur l'arbre HP est, au ralenti, largement supérieure à celle prélevée sur l'arbre BP.

En effet, le différentiel est agencé de manière à ce que le prélèvement soit réparti entre l'arbre HP et l'arbre BP en régime de croisière. En régime de ralenti, la diminution de vitesse de l'arbre BP est proportionnellement plus importante que la diminution de vitesse de l'arbre HP, ce qui implique qu'en régime de ralenti le prélèvement sur l'arbre HP augmente d'autant plus. A titre d'exemple qui reflète des valeurs classiques pour un turbomoteur à double flux, supposons qu'en régime de plein gaz, la vitesse du corps HP soit de 16 000 tours/minute, tandis que la vitesse du corps BP est de 4500 tours/minutes ; en régime de ralenti, la vitesse du corps HP sera de 8 000 tours/minutes (soit un rapport de vitesses de l'ordre de 2) tandis que la vitesse du corps BP sera de 1000 tours/minutes (soit un rapport de vitesses de l'ordre de 4,5).

Il en résulte qu'en régime de ralenti, la puissance requise, qui est la même qu'en régime de pleins gaz, est principalement prélevée sur l'arbre HP, alors même que celui-ci tourne deux fois moins vite qu'en régime de pleins gaz. Les risques de pompage du compresseur HP sont donc importants.

Une solution à ce problème serait de prévoir une boîte de vitesses automatique entre les deux arbres. Toutefois, une telle boîte est très lourde et onéreuse à mettre en place et nécessite un pilote électro-hydraulique particulier.

Le document GB 2 411 437 A décrit un moteur à turbine à gaz comprenant une première pompe hydraulique reliée à un moteur de starter et une deuxième pompe hydraulique reliée à un compresseur haute pression. En fonction du régime moteur, le moteur de starter n'est pas entraîné par le même compresseur.

L'invention vise à proposer un turbomoteur avec un dispositif d'entraînement de l'alternateur qui soit plus simple à mettre en place et moins lourd qu'une boîte de vitesses, tout en permettant un entraînement de l'alternateur dans lequel la proportion de puissance prélevée sur le corps HP à bas régime n'est pas trop importante en comparaison de la puissance prélevée sur le corps BP.

A cet effet, l'invention concerne un turbomoteur à double corps, comprenant un rotor basse pression et un rotor haute pression, un alternateur, comprenant un inducteur et un induit, le rotor haute pression entraînant en rotation l'inducteur de l'alternateur, caractérisé par le fait que l'induit est monté rotatif et le rotor basse pression est relié à des moyens d'embrayage agencés de telle sorte que le rotor basse pression entraîne l'induit de manière contrarotative à l'inducteur lorsque les moyens d'embrayage sont embrayés.

Grâce à l'invention, en fonction du régime moteur et de la demande en puissance électrique, les moyens d'embrayage sont embrayés ou non. En particulier, les moyens d'embrayage sont embrayés en régime de ralenti. Dans ce cas, le rotor BP entraîne l'induit de manière contrarotative à l'inducteur. De la sorte, la vitesse tangentielle de l'inducteur par rapport à l'induit est égale à la somme des valeurs absolues des vitesses de l'induit et de l'inducteur. La puissance est donc prélevée de manière répartie entre le rotor BP et le rotor HP, sans qu'il soit nécessaire que ces puissances soient trop importantes puisqu'elles sont sommées.

De préférence, le turboréacteur comprenant une structure fixe, les moyens d'embrayage sont agencés de telle sorte que, lorsqu'ils sont débrayés, il rendent l'induit solidaire en rotation de la structure fixe et le bloque ainsi en rotation, et que, lorsqu'ils sont embrayés, ils connectent l'induit avec le rotor basse pression du turbomoteur.

De préférence encore, les moyens d'embrayage comprennent un embrayage-frein.

De préférence toujours, les moyens d'embrayage sont commandés par des moyens hydrauliques.

Selon une forme de réalisation préférée, l'alternateur étant placé en position excentrée radialement sur le turboréacteur, le mouvement est transmis depuis les rotors basse pression et haute pression vers l'induit et l'inducteur par des arbres de transmission radiaux par rapport à l'axe du turbomoteur.

L'invention concerne également un procédé de transmission de mouvement à un alternateur, dans un turbomoteur à double corps, comprenant un rotor basse pression et un rotor haute pression, un alternateur, comprenant un inducteur et un induit, caractérisé par le fait que :
- dans un premier régime moteur, le rotor haute pression entraîne en rotation l'inducteur de l'alternateur, l'induit restant fixe, et
- dans un second régime moteur, le rotor haute pression entraîne en rotation l'inducteur de l'alternateur et le rotor basse pression entraîne l'induit de manière contrarotative à l'inducteur.

De préférence, le turboréacteur comporte des moyens d'embrayage, agencés de telle sorte que le rotor basse pression entraîne l'induit de manière contrarotative à l'inducteur lorsque les moyens d'embrayage sont embrayés et que l'induit reste fixe lorsque les moyens d'embrayage sont débrayés.

L'invention sera mieux comprise à l'aide de la description suivante de la forme de réalisation préférée du turboréacteur de l'invention, en référence aux planches de dessin annexées, sur lesquelles :
- la figure 1 est une représentation schématique, en coupe axiale et de profil, du système de transmission de puissance mécanique du turboréacteur de l'invention, depuis les rotors BP et HP jusqu'à l'alternateur et
- la figure 2 est une représentation schématique agrandie du système de la figure 1, avec, dans la partie de la figure située au-dessus de l'axe A de l'alternateur, l'embrayage-frein en position débrayée et, dans la partie de la figure située au-dessous de l'axe A de l'alternateur, l'embrayage-frein en position embrayée.

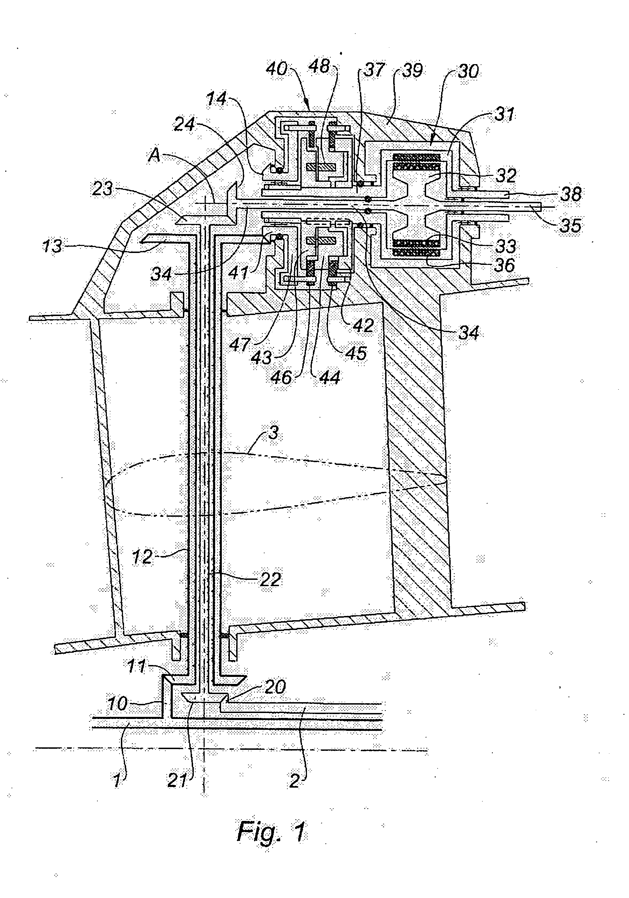

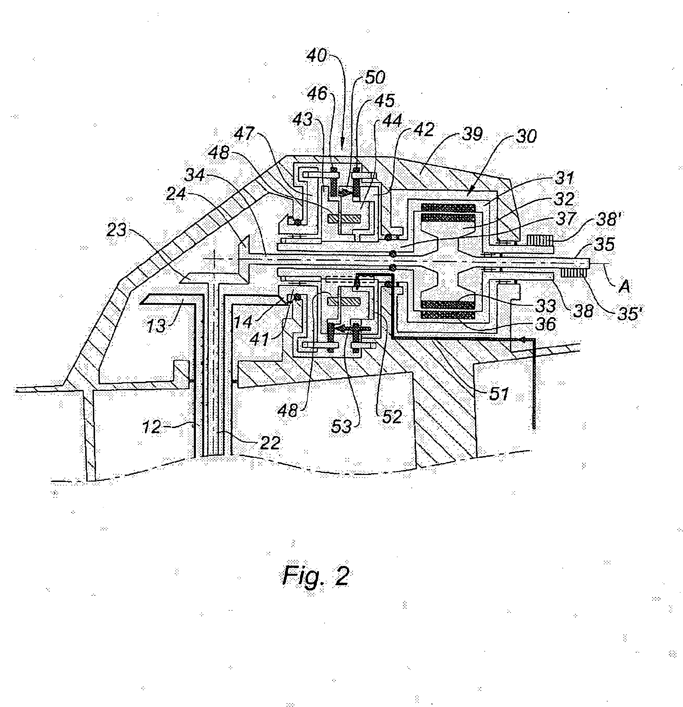

Les figures 1 et 2 représentent l'ensemble - pour la figure 1 - ou quasiment l'ensemble - pour la figure 2 - du dispositif de transmission de puissance mécanique, depuis les rotors haute pression (HP) et basse pression (BP) jusqu'à l'alternateur, les autres éléments du turboréacteur n'ayant pas été représentés car ils sont bien connus de l'homme du métier.

En référence à ces figures 1 et 2, le turbomoteur de l'invention est un turbomoteur à double corps, comportant un rotor basse pression (BP) 1 et un rotor haute pression (HP) 2. Ce type de turbomoteur est bien connu de l'homme du métier. Il s'agit ici d'un turboréacteur. Il s'agit en fait de tout turbomoteur comportant un compresseur et une turbine, double corps, avec un corps basse pression et un corps haute pression. Chacun des rotors 1, 2 comporte, à sa périphérie, longitudinalement environ au niveau des bras structuraux du carter intermédiaire du turboréacteur, un pignon conique 10, 20, respectivement. Le pignon 20 du rotor HP 2 se situe au niveau de l'extrémité amont du rotor HP, le pignon 10 du rotor BP 1 se situant juste en amont de cette extrémité. Le carter intermédiaire est un carter structural, dont une enveloppe externe se situe dans le prolongement et en aval du carter de soufflante, comportant des bras structuraux et qui est notamment le carter auquel est fixé le mât de liaison amont à l'aéronef destiné à être propulsé par le turboréacteur. Le carter intermédiaire se situe longitudinalement entre le compresseur BP et le compresseur HP.

Chaque pignon conique 10, 20 d'un rotor 1, 2 engrène avec un pignon conique 11, 21, respectivement, que l'on nommera pignon 11, 21 de prise de mouvement, permettant un renvoi d'angle à 90°. En fonction de l'encombrement au niveau de ces pignons (10, 11), (20, 21) ainsi que de leur écartement angulaire et radial l'un de l'autre, une augmentation de la vitesse du mouvement, par différence de leur nombre de dents (on parle du rapport de réduction), peut être prévue au niveau de chaque paire de pignons (10, 11), (20, 21) engrenés.

Chaque pignon 11, 21 de prise de mouvement est solidaire d'un arbre 12, 22 de transmission de mouvement, qui s'étend radialement par rapport à l'axe du turboréacteur, vers l'extérieur du turboréacteur, dans un bras structural du carter intermédiaire. Les arbres 12, 22 s'étendent ici concentriquement l'un à l'autre dans ledit bras structural. On a représenté, sous la référence 3, en traits en pointillés, une vue en coupe radiale du bras structural dans lequel s'étendent les arbres 12, 22 de transmission de mouvement ; on voit que la forme du bras est aérodynamique. Cette vue en coupe radiale 3 est superposée à la vue en coupe axiale de la figure 1.

A son extrémité radiale externe, chacun de ces bras de transmission 12, 22 comporte un pignon conique 13, 23, que l'on nommera pignon 13, 23 de transmission de mouvement, solidaire du bras de transmission 12, 22, qui engrène avec un pignon conique 14, 24, que l'on nommera pignon 14, 24 d'entraînement de l'alternateur, ou pignon d'entraînement 14, 24, permettant un renvoi d'angle, ici à 90°. De nouveau, une augmentation de la vitesse du mouvement peut être prévue à ce niveau.

Le turboréacteur comporte un alternateur 30, comportant un induit 31 et un inducteur 32. La rotation de l'inducteur 32 par rapport à l'induit 31 provoque, de manière connue, la génération d'électricité. En l'espèce, l'alternateur 30 est un alternateur à aimants permanents.

L'inducteur 32 est un rotor, monté rotatif par rapport à l'induit 31, autour de l'axe A de l'alternateur 30. L'inducteur 32 supporte à sa périphérie des aimants 33, dont la charge magnétique reste constante dans le temps, d'où la dénomination d'aimants permanents. Le rotor de l'inducteur 32 est solidaire d'un arbre d'entrée 34 et d'un arbre de sortie 35.

L'induit 31 se présente sous la forme d'un cylindre, supportant sur sa paroi interne un bobinage 36, situé au droit des aimants 33 de l'inducteur 32, ce dernier s'étendant au sein de l'induit 31 et concentriquement à ce dernier. La rotation des aimants 33 par rapport au bobinage 36 implique la génération d'un courant électrique au sein du bobinage 36. L'induit 31 est solidaire d'un arbre d'entrée 37 et d'un arbre de sortie 38, lesdits arbres d'entrée 37 et de sortie 38 s'étendant concentriquement et autour des arbres d'entrée 34 et de sortie 35, respectivement, solidaires de l'inducteur 32.

On note à ce niveau de l'exposé qu'il n'a pas été fait référence aux paliers du turboréacteur de l'invention, pour les différentes pièces tournantes que sont notamment les rotors BP 1 et HP 2, les arbres de transmission 12, 22 et les différentes pièces de l'alternateur 30. Il n'y sera pas non plus fait référence dans la suite de l'exposé, car l'homme du métier est tout à fait compétent pour prévoir des paliers pour les pièces tournantes entre elles et avec la structure fixe du turboréacteur, de manière à assurer leur support et leur liberté de mouvement en rotation sur leur axe. Ces paliers ont en l'occurrence été représentés de manière schématique sur les figures. Leur mise en place et leur dimensionnement sont tout à fait accessibles à l'homme du métier par des travaux de routine.

On note que la structure fixe 39 du turboréacteur, comportant notamment ici le bâti 39 de l'alternateur 30, a été représentée en hachures sur les figures 1 et 2.

Le pignon d'entraînement 24, entraîné en rotation par le rotor HP 2 par le biais de l'arbre de transmission de mouvement 22, est ménagé à l'extrémité de l'arbre d'entrée 34 de l'inducteur 32. L'inducteur 32 est ainsi entraîné en rotation par le rotor HP 2. Sa vitesse de rotation dépend du rapport de réduction entre les dents des divers pignons 20, 21, 23, 24 de transmission de mouvement. Il est possible de prévoir d'autres pignons pour modifier la vitesse ou le sens de rotation de l'inducteur 32.

L'induit 31, communément appelé stator dans les alternateurs classiques, est ici un rotor, c'est-à-dire qu'il est monté rotatif, autour de l'axe A de l'alternateur 30, par rapport à la structure fixe 39 du turboréacteur.

Le pignon d'entraînement 14, entraîné en rotation par le rotor BP 1 par le biais de l'arbre de transmission de mouvement 12, est ménagé à l'extrémité de l'arbre d'entrée 41 d'un moyen d'embrayage 40. Le moyen d'embrayage 40 est en l'espèce un embrayage connu sous la dénomination "embrayage-frein", du fait de la similitude de sa structure avec un frein à disque. Les embrayages-freins sont bien connus pour leur fiabilité. L'embrayage-frein 40 est relié en sortie à l'arbre d'entrée 37 de l'induit 31 de l'alternateur 30. Il est coaxial avec l'alternateur 30.

L'embrayage-frein 40 est agencé de telle sorte que, dans son mode débrayé, il rend l'induit 31 solidaire en rotation de la structure fixe 39 et le bloque ainsi en rotation, et que, dans son mode embrayé, il embraye, ou connecte, l'induit 31 avec l'arbre d'entrée 41 de l'embrayage-frein 40, c'est-à-dire que l'induit 31 est entraîné en rotation par le rotor BP 1 du turboréacteur.

La structure de l'embrayage-frein 40 est classique et va maintenant être décrite relativement succinctement, les détails de cette structure étant accessibles à l'homme du métier.

L'arbre d'entrée 37 de l'induit 31 est l'arbre de sortie de l'embrayage-frein 40. Il supporte un premier disque 42 et un deuxième disque 43, s'étendant transversalement à son axe A, qui lui sont solidaires. L'embrayage-frein 40 comporte par ailleurs un disque 44 mobile en translation. Chacun des disques 42, 43 solidaires de l'arbre de sortie 37 de l'embrayage-frein 40 est agencé pour former une portion de mâchoire, le disque mobile 44 formant l'autre portion de mâchoire avec l'un ou l'autre des disques 42, 43, en fonction de l'état débrayé ou embrayé, respectivement, de l'embrayage-frein 40.

Les mâchoires (42, 44), (43, 44) sont agencées pour pouvoir venir en prise avec une première et une deuxième garniture 45, 46, respectivement, qu'elles viennent pincer entre leur disque 42, 43 solidaire de l'arbre de sortie 37 et le disque mobile 44. Chaque garniture 45, 46 s'étend donc entre les deux portions d'une mâchoire (42, 44), (43, 44), respectivement. Ces garnitures 45, 46 sont formées avec des matériaux de friction, de manière classique. Une telle garniture 45, 46, si elle est juste en contact avec une pièce (en l'espèce, le disque d'une mâchoire (42, 44), (43, 44)), frotte sur elle en cas de mouvement relatif entre les deux, mais sans qu'il n'y ait d'entraînement. En revanche, si la garniture 45, 46 est mise en appui, avec une pression suffisante, contre la pièce, elle se solidarise à elle et tout mouvement en rotation de l'une entraîne le mouvement de l'autre ; un tel ancrage de la garniture contre la pièce est obtenu grâce aux forces de frottement engendrées par la pression exercée par les mâchoires (42, 44), (43, 44) sur les garnitures 45, 46. Le fonctionnement des mâchoires (42, 44), (43, 44) avec les garnitures 45, 46 est ainsi tout à fait similaire au fonctionnement des freins à disques.

Si une garniture 45, 46 est comprimée entre les deux portions d'une mâchoire (42, 44), (43, 44), elle rend ces portions de mâchoire (42, 44), (43, 44) solidaires d'elle. Si les deux portions d'une mâchoire (42, 44), (43, 44) ne sont pas contraintes l'une vers l'autre pour comprimer entre elles une garniture 45, 46, cette garniture 45, 46 et les deux portions de mâchoire (42, 44), (43, 44) ne sont pas solidaires en rotation et peuvent tourner librement les unes par rapport aux autres. Généralement, il peut dans ce cas tout de même y avoir contact entre la garniture 45, 46 et l'une et/ou l'autre des portions de mâchoire (42, 44), (43, 44), mais les frottements ne sont pas suffisants pour les rendre solidaires en rotation.

La première garniture 45 est solidaire de la structure fixe 39 du turboréacteur. Par conséquent, lorsque le disque mobile 44 comprime la première garniture 45 contre le premier disque 42, le premier disque 42 et donc l'arbre de sortie 37 de l'embrayage-frein 40 sont solidaires de la structure fixe 39. Ainsi, l'induit 31 est solidaire de la structure fixe 39 et est bloqué en rotation : il s'agit de la position débrayée de l'embrayage-frein 40.

La deuxième garniture 46 est solidaire d'un disque 47 lui-même solidaire de l'arbre d'entrée 41 de l'embrayage-frein 40 et donc, par l'intermédiaire de l'arbre de transmission de mouvement 12, du rotor BP 1. Par conséquent, lorsque le disque mobile 44 comprime la deuxième garniture 46 contre le deuxième disque 43, le deuxième disque 43 et donc l'arbre de sortie 37 de l'embrayage-frein 40 sont solidaires en rotation de l'arbre d'entrée 41 de l'embrayage-frein 40, c'est-à-dire qu'ils sont entraînés en rotation par le rotor BP 1. Ainsi, l'induit 31 est entraîné en rotation par le rotor BP 1 : il s'agit de la position embrayée de l'embrayage-frein 40.

Sur la portion de la figure 2 située au-dessus de l'axe A de l'alternateur 30, l'embrayage-frein 40 est en position débrayée. Il s'agit de la position par défaut de l'embrayage-frein 40. Cette position est obtenue grâce à un ressort 48, placé entre le deuxième disque 43 et le disque mobile 44 et qui contraint le disque mobile 44 en direction du premier disque 42, comme schématiquement représenté par le flèche 50 : la première mâchoire (42, 44) est ainsi refermée et comprimée sur la première garniture 45 et l'induit 31 est bloqué en rotation. Dans cette position, la deuxième garniture 46 tourne librement avec l'arbre d'entrée 41 de l'embrayage-frein 40, sans entraîner avec elle le deuxième disque 43 (il peut éventuellement y avoir des frottements entre les deux, mais pas d'entraînement).

Sur la portion de la figure 2 située au-dessous de l'axe A de l'alternateur 30, l'embrayage-frein 40 est en position embrayée. Un circuit hydraulique est prévu sur le turboréacteur, symbolisé par les lignes pointées par la référence 51. Grâce à ce dernier, de l'huile peut être alimentée dans un espace fermé 52 ménagé entre le premier disque 42 et le disque mobile 44. Si la pression d'huile est suffisamment importante, elle s'oppose à la force exercée par le ressort 48 ; le disque mobile 44 est ainsi contraint en direction du deuxième disque 43, contre l'action du ressort 48, comme schématisé par la flèche 53. La deuxième mâchoire (43, 44) est ainsi refermée et comprimée sur la deuxième garniture 46 et l'induit 31 est entraîné en rotation par le rotor BP 1. Dans cette position, la première garniture 45 reste solidaire de la structure fixe 39, tandis que le premier disque 42 tourne avec l'arbre de sortie 37 de l'embrayage-frein 40 ; il peut éventuellement y avoir des frottements entre les deux mais pas d'entraînement.

Ainsi, le circuit hydraulique 51 permet de piloter l'embrayage-frein 40 entre une position débrayée, dans laquelle l'induit 31 est fixe, l'inducteur 32 étant par ailleurs entraîné en rotation par le rotor HP 2, et une position embrayé, dans laquelle l'induit 31 est entraîné en rotation par le rotor BP 1, tandis que l'inducteur 32 est entraîné en rotation par le rotor HP 2. L'induit 31 et l'inducteur 32 sont entraînés en rotation de manière contrarotative.

Dans le cas d'espèce considéré, les rotors BP 1 et HP 2 sont contrarotatifs. Si les rotors BP 1 et HP 2 sont co-rotatifs, il est aisé à l'homme du métier d'adapter la transmission de mouvement depuis ces rotors 1, 2 jusqu'à l'alternateur 30 de sorte que l'induit 31 et l'inducteur 32 soient entraînés, lorsque l'embrayage-frein 40 est embrayé, de manière contrarotative.

Le circuit hydraulique 51 est commandé, de préférence par le calculateur du turboréacteur, communément désigné sous l'acronyme FADEC, qui provient de la dénomination anglaise "Full Authority Digital Engine Control" ; le FADEC est le calculateur qui contrôle les divers organes du turboréacteur. Il contrôle ici notamment le circuit hydraulique 51. La commande du circuit hydraulique 51 permet, comme présenté ci-dessus, la commande de l'embrayage-frein 40 et donc la commande de l'entraînement en rotation ou non de l'induit 31 par le rotor BP 1.

Lorsque l'induit 31 est entraîné en rotation par le rotor BP 1, de manière contrarotative à l'inducteur 32, la vitesse relative de l'inducteur 32 par rapport à l'induit 31 est égale à la somme, en valeur absolue, de la vitesse de rotation de l'induit 31 et de la vitesse de rotation de l'inducteur 32 par rapport à la structure fixe 39 du turboréacteur. Dans ce cas-là, pour une puissance donnée requise en sortie de l'alternateur 30, il suffit de prélever une partie de cette puissance sur le rotor BP 1 et l'autre partie sur le rotor HP 2, ces deux parties de puissance s'additionnant.

On note que la conversion de l'énergie mécanique en énergie électrique puis la transmission de l'énergie électrique se font ici de manière classique. L'arbre de sortie 38 de l'induit 31 supporte des balais 38', bien connus de l'homme du métier, par lesquels circule le courant électrique de sortie généré dans l'induit 31. Par ailleurs, l'arbre de sortie 35 de l'inducteur 32 supporte des balais 35', bien connus de l'homme du métier, par lesquels peut être alimenté un courant électrique permettant de faire tourner l'inducteur 32 et donc le rotor HP 2 ; ce mode de fonctionnement de l'alternateur 30, dans lequel l'alternateur 30 est alimenté en courant électrique, permet de démarrer le turboréacteur. Cela n'est pas vraiment en lien avec la présente invention, mais on note ici que l'invention n'interdit pas le fonctionnement de l'alternateur 30 en tant que démarreur pour le turboréacteur : pour ce mode de fonctionnement, l'inducteur 32 est entraîné en rotation et l'induit 31 est bloqué par l'embrayage-frein 40.

Le fonctionnement du turboréacteur de l'invention va maintenant être expliqué plus en détails.

En régime de croisière ou en régime de pleins gaz, par exemple, le rotor HP 2 tourne suffisamment vite pour fournir la puissance désirée en sortie de l'alternateur 30. Dans ce cas, le circuit hydraulique 51 est commandé de telle sorte que la pression d'huile dans la chambre 52 n'est pas trop importante, c'est-à-dire que l'embrayage 40 est en position débrayée. Seul l'inducteur 32 tourne, entraîné en rotation par le rotor HP 2, l'induit 31 restant fixe. L'alternateur 30 fournit alors une puissance électrique P.

En régime de ralenti ou en régime d'approche (c'est-à-dire avant un atterrissage), par exemple, le rotor HP 2 ne tourne plus suffisamment vite pour fournir sans pompage la puissance désirée en sortie de l'alternateur 30. Dans ce cas, le circuit hydraulique 51 est commandé de telle sorte que la pression d'huile dans la chambre 52 est supérieure à la pression exercée par le ressort 48 et suffisante pour refermer la deuxième mâchoire (43, 44) sur la deuxième garniture 46, c'est-à-dire que l'embrayage 40 est actionné en position embrayée. Dans ce cas, l'induit 31 et l'inducteur 32 tournent de manière contrarotative, entraînés en rotation respectivement par le rotor BP 1 et le rotor HP 2.

Ainsi, lorsque l'embrayage 40 est embrayé, une même puissance P peut être fournie par l'alternateur 30, dont le prélèvement mécanique est réparti entre le rotor BP 1 et le rotor HP 2.

A titre d'exemple, supposons qu'en régime de pleins gaz, le rotor HP 2 tourne à une vitesse de 16 000 tours/minute et le rotor BP 1 tourne à une vitesse de 4500 tours/minutes. Supposons également qu'en régime de ralenti, le rotor HP 2 tourne à une vitesse de 8000 tours/minute et le rotor BP 1 tourne à une vitesse de 1000 tours/minute. Supposons qu'en régime de pleins gaz, avec l'embrayage 40 débrayé, la vitesse tangentielle (nominale) de l'inducteur 32 par rapport à l'induit 31 est égale à 100, ce qui produit une puissance P. En régime de ralenti, la vitesse tangentielle de l'inducteur 32 par rapport à la structure fixe 39 est égale à 50, dans la mesure où le rotor HP 2 tourne deux fois moins vite ; une telle vitesse ne permettrait que de produire une puissance égale à P/2 si l'induit 31 restait fixe. Toutefois, lors du passage en régime de ralenti, l'embrayage 40 est commandé de sorte à passer en position embrayée. La transmission depuis le rotor BP 1 jusqu'à l'induit 31 est dimensionnée de telle sorte que la vitesse tangentielle de l'induit 31 par rapport à la structure fixe 39, lorsque le rotor BP 1 tourne à 1000 tours/minute, est égale à 50, en valeur absolue, l'induit 31 tournant dans le sens inverse de l'inducteur 32. Ainsi, la vitesse tangentielle de l'inducteur 32 par rapport à l'induit 31 est égale à 50 + 50 = 100, ce qui produit une puissance égale à P.

Ainsi, grâce à la commande de l'embrayage 40, une même puissance P peut être produite à la fois en régime de pleins gaz et en régime de ralenti, la puissance étant prélevée à 100% sur le rotor HP 2 en régime de pleins gaz et seulement à 50% (dans l'exemple considéré) en régime de ralenti, ce qui réduit les risques de pompage du compresseur HP.

Il va de soi que la proportion de puissance prélevée respectivement sur le rotor HP 2 et sur le rotor BP 1 en régime de ralenti peut être adaptée par l'homme du métier en fonction de ses contraintes, par simple adaptation des rapports de réduction au niveau des engrenages mis en jeu dans la chaîne cinématique permettant la transmission de mouvement depuis les rotors HP 2 et BP 1 jusqu'à l'inducteur 32 et l'induit 31 de l'alternateur 30. Par ailleurs, cette chaîne cinématique est ici adaptée de sorte à obtenir une puissance P constante quelle que soit le régime, mais on pourrait prévoir que les puissances générées selon le régime ne soient pas les mêmes. De manière générale, la limite de prélèvement sur le rotor BP 1 est fixée par la limite autorisée de vitesse de rotation pour l'induit 31.

Par ailleurs, l'invention a été présentée en relation avec le pilotage de l'embrayage du moyen d'embrayage 40 lors du passage d'un régime de pleins gaz à un régime de ralenti, car c'est précisément dans cette situation que le problème à l'origine de l'invention s'est posé, mais il va de soi que la commande du moyen d'embrayage 40 peut se faire dans d'autres conditions.

On note également que, dans l'exemple considéré, l'embrayage-frein 40 est commandé de sorte à passer en position débrayée lors du passage d'un régime de ralenti à un régime de pleins gaz.

Le moyen d'embrayage 40 utilisé est ici un embrayage-frein, car ce dispositif est connu pour sa fiabilité. Tout autre moyen d'embrayage équivalent, qui remplisse une fonction d'embrayage ou de débrayage de l'induit 31 par rapport au rotor BP 1, peut être utilisé, qu'il soit par friction (comme l'embrayage-frein), ou par couplage magnétique, par exemple.

En outre, l'invention a été présentée avec l'alternateur 30 placé en position excentrée radialement sur le turboréacteur, le mouvement étant transmis depuis les rotors BP 1 et HP 2 jusqu'à l'induit 31 et l'inducteur 32, respectivement, par des arbres de transmission 12, 22 s'étendant radialement au sein d'un bras structural du carter intermédiaire du turboréacteur. Selon une autre forme de réalisation, les rotors BP 1 et HP 2 étant contrarotatifs, l'alternateur et l'embrayage sont montés de manière coaxiale avec les rotors BP 1 et HP 2 ; une telle solution est plus compacte que la précédente mais plus difficile à mettre en place.

Le moyen de commande de l'embrayage 40 a été présenté comme étant un moyen hydraulique 51, mais tout autre moyen de commande pourrait être prévu, par exemple pneumatique ou électronique, si le moyen d'embrayage 40 le permet.

Notons enfin que l'alternateur 30 peut être, soit à l'intérieur du boîtier d'accessoires du turboréacteur, soit indépendant de celui-ci.

## Revendications

1. Turbomoteur à double corps, comprenant un rotor basse pression (1) et un rotor haute pression (2), un alternateur (30), comprenant un inducteur (32) et un induit (31), le rotor haute pression (2) entraînant en rotation l'inducteur (32) de l'alternateur (30), **caractérisé par le fait que** l'induit (31) est monté rotatif et le rotor basse pression (1) est relié à des moyens d'embrayage (40) agencés de telle sorte que le rotor basse pression (1) entraîne l'induit (31) de manière contrarotative à l'inducteur (32) lorsque les moyens d'embrayage (40) sont embrayés.

2. Turbomoteur selon la revendication 1 dans lequel, le turboréacteur comprenant une structure fixe (39), les moyens d'embrayage (40) sont agencés de telle sorte que, lorsqu'ils sont débrayés, il rendent l'induit (31) solidaire en rotation de la structure fixe (39) et le bloque ainsi en rotation, et que, lorsqu'ils sont embrayés, ils connectent l'induit (31) avec le rotor basse pression (1) du turbomoteur.

3. Turbomoteur selon l'une des revendications 1 ou 2, dans lequel les moyens d'embrayage comprennent un embrayage-frein (40).

4. Turbomoteur selon l'une des revendications 1 à 3, dans lequel les moyens d'embrayage (40) sont commandés par des moyens hydrauliques (51).

5. Turbomoteur selon l'une des revendications 1 à 4 dans lequel, l'alternateur (30) étant placé en position excentrée radialement sur le turboréacteur, le mouvement est transmis depuis les rotors basse pression (1) et haute pression (2) vers l'induit (31) et l'inducteur (32) par des arbres de transmission (12, 22) radiaux par rapport à l'axe du turbomoteur.

6. Procédé de transmission de mouvement à un alternateur, dans un turbomoteur à double corps, comprenant un rotor basse pression (1) et un rotor haute pression (2), un alternateur (30), comprenant un inducteur (32) et un induit (31), **caractérisé par le fait que** :
- dans un premier régime moteur, le rotor haute pression (2) entraîne en rotation l'inducteur (32) de l'alternateur (30), l'induit (31) restant fixe, et
- dans un second régime moteur, le rotor haute pression (2) entraîne en rotation l'inducteur (32) de l'alternateur (30) et le rotor basse pression (1) entraîne l'induit (31) de manière contrarotative à l'inducteur (32).

7. Procédé selon la revendication 6 dans lequel le turboréacteur comporte des moyens d'embrayage (40), agencés de telle sorte que le rotor basse pression (1) entraîne l'induit (31) de manière contrarotative à l'inducteur (32) lorsque les moyens d'embrayage (40) sont embrayés et que l'induit (31) reste fixe lorsque les moyens d'embrayage (40) sont débrayés.

## Claims

1. A twin-spool turbine engine, comprising a low-pressure rotor and a high-pressure rotor, an alternator, comprising an inductor winding and an armature, the high-pressure rotor rotating the inductor winding of the alternator, wherein the armature is mounted so as to rotate and the low-pressure rotor is connected to clutch means arranged so that the low-pressure rotor drives the armature in a manner that is contrarotational to the inductor winding when the clutch means are engaged.

2. The turbine engine as claimed in claim 1, wherein, the turbojet comprising a fixed structure, the clutch means are arranged so that, when they are disengaged, they render the armature fixedly attached in rotation to the fixed structure and thereby stop it rotating, and, when they are engaged, they connect the armature with the low-pressure rotor of the turbine engine.

3. The turbine engine as claimed in one of claims 1 or 2, wherein the clutch means comprise a clutch-brake.

4. The turbine engine as claimed in one of claims 1 to 3, wherein the clutch means are controlled by hydraulic means.

5. The turbine engine as claimed in one of claims 1 to 4, wherein, the alternator being placed in a radially eccentric position on the turbojet, the movement is transmitted from the low-pressure rotor and high-pressure rotor to the armature and the inductor winding by transmission shafts that are radial relative to the axis of the turbine engine.

6. A method of transmitting movement to an alternator, in a twin-spool turbine engine, comprising a low-pressure rotor and a high-pressure rotor, an alternator, comprising an inductor winding and an armature, wherein:
- at a first engine speed, the high-pressure rotor rotates the inductor winding of the alternator, the armature remaining fixed, and
- at a second engine speed, the high-pressure rotor rotates the inductor winding of the alternator and the low-pressure rotor drives the armature in a manner that is contrarotational to the inductor winding.

7. The method as claimed in claim 6, wherein the turbojet comprises clutch means, arranged so that the low-pressure rotor drives the armature in a manner that is contrarotational to the inductor winding when the clutch means are engaged and the armature remains fixed when the clutch means are disengaged.

## Patentansprüche

1. Zweiwelliger Turbomotor, umfassend einen Niederdruckrotor (1) und einen Hochdruckrotor (2), einen Generator (30), der einen Feldmagneten (32) und einen Anker (31) umfasst, wobei der Hochdruckrotor (2) den Feldmagneten (32) des Generators (30) dreht, **dadurch gekennzeichnet, dass** der Anker (31) drehbar gelagert ist, und der Niederdruckrotor (1) mit Kupplungsmitteln (40) verbunden ist, die derart angeordnet sind, dass der Niederdruckrotor (1) den Anker (31) dem Feldmagneten (32) entgegengesetzt dreht, wenn die Kupplungsmittel (40) eingerückt sind.

2. Turbomotor nach Anspruch 1, wobei das Turboluftstrahltriebwerk ein festes Gefüge (39) aufweist und die Kupplungsmittel (40) derart angeordnet sind, dass sie, wenn sie ausgerückt sind, den Anker (31) mit dem festen Gefüge (39) drehfest machen und somit seine Drehung blockieren, und dass sie, wenn sie eingerückt sind, den Anker (31) mit dem Niederdruckrotor (1) des Turbomotors verbinden.

3. Turbomotor nach einem der Ansprüche 1 oder 2, wobei die Kupplungsmittel eine Bremskupplung (40) umfassen.

4. Turbomotor nach einem der Ansprüche 1 bis 3, wobei die Kupplungsmittel (40) von hydraulischen Mitteln (51) gesteuert werden.

5. Turbomotor nach einem der Ansprüche 1 bis 4, wobei der Generator (30) in einer radial außermittigen Position auf dem Turboluftstrahltriebwerk angeordnet ist und dabei die Bewegung von dem Niederdruckrotor (1) und dem Hochdruckrotor (2) auf den Anker (31) und den Feldmagneten (32) durch Übertragungswellen (12, 22) übertragen wird, die zur Achse des Turbomotors radial sind.

6. Verfahren zur Übertragung einer Bewegung auf einen Generator in einem zweiwelligen Turbomotor, umfassend einen Niederdruckrotor (1) und einen Hochdruckrotor (2), einen Generator (30), der einen Feldmagneten (32) und einen Anker (31) umfasst, **dadurch gekennzeichnet, dass:**
- bei einer ersten Motordrehzahl der Hochdruckrotor (2) den Feldmagneten (32) des Generators (30) dreht, wobei der Anker (31) fest bleibt, und
- bei einer zweiten Motordrehzahl der Hochdruckrotor (2) den Feldmagneten (32) des Generators (30) dreht und der Niederdruckrotor (1) den Anker (31) dem Feldmagneten (32) entgegengesetzt dreht.

7. Verfahren nach Anspruch 6, wobei das Turboluftstrahltriebwerk Kupplungsmittel (40) umfasst, die derart angeordnet sind, dass der Niederdruckrotor (1) den Anker (31) dem Feldmagneten (32) entgegengesetzt dreht, wenn die Kupplungsmittel (40) eingerückt sind, und dass der Anker (31) fest bleibt, wenn die Kupplungsmittel (40) ausgerückt sind.
